# EUROPÄISCHE PATENTSCHRIFT

(11) **EP 1 690 906 B1**
(45) Veröffentlichungstag und Bekanntmachung des Hinweises auf die Patenterteilung: **28.04.2010**
(21) Anmeldenummer: 06101380.1
(22) Anmeldetag: 07.02.2006
(51) Int. Cl.: C09J 5/02

(54) **Verfahren zum Verkleben von Werkstücken**
Method for glueing parts
Procédé pour coller des pièces

(30) Priorität: 15.02.2005 DE 102005006753
(43) Veröffentlichungstag der Anmeldung: 16.08.2006
(73) Patentinhaber: ROBERT BOSCH GMBH, 70442 Stuttgart (DE)
(72) Erfinder: Franz, Gerald, 71522, Backnang (DE)

(56) Entgegenhaltungen:
- DE-A1- 19 943 714

## Beschreibung

### Technisches Gebiet

Eine Möglichkeit, zwei Bauteile miteinander zu verbinden, besteht darin, diese miteinander zu verkleben. Wenn die Bauteile jeweils Anbauteile oder Einbauteile umfassen, die zueinander in eine vorgegebene Position gebracht werden müssen, ist es notwendig, dass sich die Bauteile beim Verbinden nicht mehr gegeneinander bewegen. Bei Klebeverbindungen ist zwischen den zu verklebenden Bauteilen ein nur kleiner Klebespalt erforderlich, weil der Klebstoff beim Aushärten schrumpft und so die zu verklebenden Bauteile aufgrund des Schrumpfes des Klebstoffes relativ zueinander bewegt werden. Auf der anderen Seite sind jedoch vergleichsweise große Spalte notwendig, um eine Justierung der Bauteile zueinander zu ermöglichen.

### Stand der Technik

Eine Verbindung zweier Werkstücke erfolgt im Allgemeinen kraftschlüssig oder formschlüssig. Zu den kraftschlüssigen Verbindungen gehören insbesondere Schraubverbindungen. Bei Schraubverbindungen ist es möglich, durch die Wahl des Durchmessers der Öffnungen in den Bauteilen, durch welche die Schraube hindurchgeführt wird, die Werkstücke gegeneinander zu verschieben und so auszurichten. Bei stoffschlüssigen Verbindungen, hierzu zählen insbesondere Schweißen, Löten und Kleben, werden die Teile, die miteinander verbunden werden sollen, zueinander in Position gebracht und anschließend miteinander verbunden. Bei Löt- und Schweißverfahren können aufgrund der dabei entstehenden Wärme Spannungen entstehen, durch die sich die Teile verziehen. Bei Klebverbindungen kann entweder Lösemittel aus dem zum Zeitpunkt des Auftragens im Allgemeinen dickflüssigen Klebstoff verdunsten, was dazu führt, dass das Klebstoffvolumen abnimmt. Auch ist es möglich, dass das Klebstoffvolumen aufgrund einer chemischen Reaktion beim Härten des Klebstoffs abnimmt. Diese Volumenabnahme wird auch als Schrumpf bezeichnet. Wenn in den miteinander zu verbindenden Werkstücken Bauteile angeordnet sind, die zueinander ausgerichtet werden müssen, ist eine genaue Justierung der miteinander zu verbindenden Werkstücke notwendig. Aufgrund des Schrumpfes des Klebstoffes ist es möglich, dass sich die Bauteile beim Aushärten der Klebverbindung verziehen und sich so die Position der in den Werkstücken aufgenommenen Bauteile zueinander verschiebt.

Eine maßhaltige Klebverbindung, das heißt eine Klebverbindung, bei der sich die Position der miteinander verbundenen Werkstücke nicht mehr verändert, erfordert kleine Klebespalte, damit ein Schrumpf während der Aushärtung des Klebstoffes nicht zu Verspannungen oder Verschiebungen der verklebten Teile führt. Durch derart kleine Klebespalte wird jedoch auch eine Bewegung der Bauteile relativ zueinander, zum Beispiel um in den Werkstücken aufgenommene Bauteile zueinander zu positionieren, verhindert.

Auch kann durch die Ausrichtung von in Werkstücken aufgenommenen Bauteilen zueinander ein Klebespalt mit unterschiedlichen Spaltweiten entstehen, so dass eine unterschiedlich dicke Schicht zum Verbinden der Bauteile notwendig ist. Diese unterschiedlich dicke Klebeschicht kann wiederum zu Verspannungen beim Aushärten führen.

Aus der deutschen Offenlegungsschrift DE 199 43 714 A1 ist ein Verfahren zur Klebeverbindung zweier flächiger Teile bekannt, wobei ein Fixierkleber zur raschen Fixierung der beiden Teile und ein langsam aushärtender Klebstoff zur Erzielung der benötigten Verbindungsfestigkeit verwendet wird.

### Darstellung der Erfindung

Um zwei miteinander zu verbindende Werkstücke gegeneinander auszurichten und zu vermeiden, dass Verspannungen oder Verschiebungen der verklebten Werkstücke im Bereich der Klebverbindung auftreten, umfasst das Verfahren zum Verkleben von mindestens zwei Werkstücken folgende Schritte:
a) Auftragen von Fixierkleber auf die zu verbindenden Werkstücke,
b) Justieren der zu verbindenden Werkstücke zueinander,
c) Platzieren von Verbindungsteilen an den mit Fixierkleber benetzten Flächen, so dass die Verbindungsteile mit mindestens zwei zu verbindenden Werkstücken in Kontakt stehen,
d) Nach dem Aushärten des Fixierklebers Verkleben der Werkstücke mit einem Klebstoff.

Durch das Platzieren der Verbindungsteile an den mit Fixierkleber benetzten Flächen wird der Spalt, der sich durch die Justierung der Werkstücke zueinander eingestellt hat, fixiert. Im Bereich der Verbindungsteile ist der Klebespalt so klein, dass ein Verschieben der miteinander verklebten Werkstücke relativ zueinander nach dem Aushärten des Fixierklebers nicht mehr möglich ist. Damit die Klebverbindung auch bei mechanischen Belastungen stabil ist, werden die Werkstücke nach dem Aushärten des Fixierklebers mit einem weiteren Klebstoff verklebt.

Das Ausrichten der Werkstücke zueinander erfolgt vorzugsweise in einer Justiervorrichtung. Hierzu wird ein Werkstück in einer ersten Halterung und ein zweites Werkstück in einer zweiten Halterung positioniert. Mindestens eine der Halterungen ist gegenüber der anderen Halterung beweglich, so dass das in der beweglichen Halterung aufgenommene Werkstück gegenüber dem Werkstück in der zweiten Halterung bewegt werden kann. Nach dem Ausrichten der Werkstücke zueinander bleiben die Werkstücke in ihren Halterungen, wobei die Halterungen so fixiert werden, dass sich diese nicht weiter bewegen können. Zwischen den Werkstücken befmdet sich jetzt vorzugsweise ein Spalt, in welchen die Verbindungsteile platziert werden. Als Verbindungsteile eignen sich zum Beispiel Kugeln, Zylinder, Kegel, Quader, Prismen mit einem beliebigen Querschnitt oder Polyeder mit einer beliebigen Anzahl von Flächen. Auch können die Verbindungsteile unregelmäßig geformt sein. Die Verbindungsteile werden so in den Spalt platziert, dass sich die Werkstücke nicht gegeneinander bewegen. Dadurch dass im Bereich des Spaltes der Fixierkleber auf die zu verbindenden Werkstücke aufgetragen ist, werden die Verbindungsteile mit den Werkstücken verklebt, sobald diese an den mit Fixierkleber benetzten Teilen anliegen.

Damit sich die Werkstücke, die über den Fixierkleber und die Verbindungsteile miteinander verbunden sind, nicht mehr gegeneinander bewegen können, werden diese vorzugsweise erst dann aus der Justiervorrichtung entnommen, wenn der Fixierkleber ausgehärtet ist. Nach dem Aushärten des Fixierklebers ist eine Verbindung erreicht, die eine stabile Positionierung der Werkstücke zueinander während der folgenden Arbeitsschritte gewährleistet.

Der Klebstoff, mit dem die Werkstücke nach dem Aushärten des Fixierklebers verklebt werden, wird vorzugsweise so gewählt, dass dieser langsam aushärtet, um zu vermeiden, dass Verspannungen in den Werkstücken auftreten.

Weiterhin ist der Klebstoff, mit dem die Werkstücke nach dem Aushärten des Fixierklebers verklebt werden, vorzugsweise so ausgewählt, dass dieser nach dem Aushärten in einem Temperaturbereich von -40°C bis +85°C hartelastisch ist. Bevorzugte Klebstoffe sind Zweikomponentenklebstoffe, wie UF-Harze, MF-Harze oder PF-Harze, bei denen die Klebstoffkomponenten jeweils so gewählt werden, dass die Klebverbindung nach dem Aushärten im Temperaturbereich von -40°C bis +85°C hartelastisch ist.

Der Klebstoff zum Verkleben der Werkstücke wird vorzugsweise so aufgetragen, dass der Spalt zwischen den Werkstücken durch den Klebstoff gegen die Umgebung abgedichtet ist. Hierdurch wird zum Beispiel beim Verkleben von Gehäusebauteilen vermieden, dass Feuchtigkeit oder Verunreinigungen wie Staub in das Gehäuse eindringen können.

Als Fixierkleber wird vorzugsweise ein Klebstoff verwendet, welcher zum Auftragen dünnflüssig ist und der schnell abbindet. Nach dem Aushärten sollte der Fixierkleber vorzugsweise spröde bis hart sein. Als Fixierkleber eignet sich zum Beispiel ein Cyanacrylat.

Neben den hier genannten sind auch alle weiteren, dem Fachmann bekannten Klebstoffe geeignet, die die mechanischen Anforderungen an die Klebverbindung erfüllen.

Aufgrund des Einsatzes der Verbindungsteile erhält man eine maßhaltige Verbindung auch bei einem breiten Klebespalt, wobei die Breite des Klebespalts maximal ¾ der Dicke der Verbindungsteile betragen darf. Auch sind aufgrund des breiten Klebspaltes die Anforderungen an die Formtreue der Klebeflächen nur gering. Aus diesem Grund sind die Anforderungen an die Maßhaltigkeit bei der Herstellung der Bauteile geringer als bei Bauteilen, die mit einer nur geringen Spaltbreite exakt zueinander positioniert werden müssen. Hierdurch werden die Produktionskosten der Werkstücke reduziert.

Das erfindungsgemäße Verfahren zum Verkleben von Werkstücken wird vorzugsweise zur Verklebung eines Objektivgehäuses mit einem Imagergehäuse einer Kamera verwendet. Hierbei ist im Objektivgehäuse die Optik der Kamera angeordnet und im Imagergehäuse eine Platine mit einem optischen Bildspeichermedium. Als optisches Bildspeichermedium eignet sich zum Beispiel ein CCD-Chip oder ein CMOS-Chip. Um eine optimale Funktion der Kamera zu gewährleisten, muss das optische Bildspeichermedium so zur Optik ausgerichtet werden, dass das von der Optik erfasste Bild auf dem Speicherbereich des optischen Bildspeichermediums abgebildet wird. Aus diesem Grund darf es auch nach dem Verbinden von Objektivgehäuse und Imagergehäuse nicht zu Verspannungen oder Verschiebungen im Bereich der Klebeverbindungen kommen, da sonst die Optik und das optische Bildspeichermedium zueinander verschoben werden und so die Funktion der Kamera beeinträchtigt wird.

Derartige Kameras können zum Beispiel bei Automotive-Videoanwendungen eingesetzt werden. Das heißt, dass die Kamera zur Erfassung optischer Daten im Rahmen eines Fahrassistenzsystems in einem Kraftfahrzeug eingesetzt wird.

### Zeichnung

Im Folgenden wird die Erfindung anhand einer Zeichnung näher beschrieben.

Es zeigt:
Figur 1 eine erfindungsgemäße Klebeverbindung bei ineinandergreifenden Bauteilen,
Figur 2 eine Klebeverbindung bei fluchtend aufeinander positionierten Bauteilen,
Figur 3 eine erfindungsgemäße Klebeverbindung bei Bauteilen mit kreisförmigem Querschnitt,
Figur 4 eine erfindungsgemäße Klebeverbindung mit Bauteilen mit rechteckigem Querschnitt mit kugelförmigen Verbindungsteilen,
Figur 5 eine erfindungsgemäße Klebeverbindung für Bauteile mit rechteckigem Querschnitt mit zylinderförmigen Verbindungsteilen.

### Ausfiihrungsvarianten

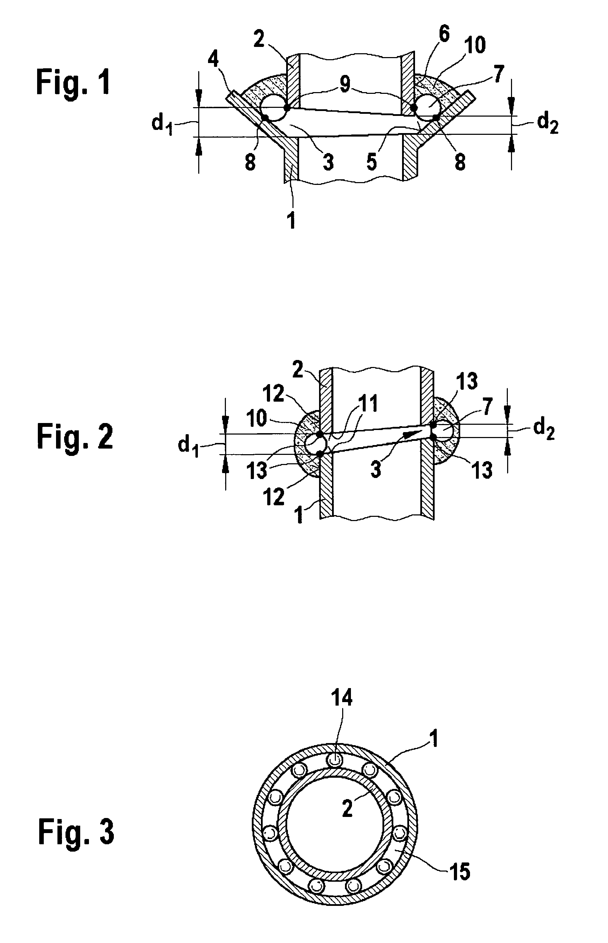

Figur 1 zeigt eine erfindungsgemäße Klebeverbindung mit ineinander greifenden Werkstücken.

Zur Verbindung zweier Werkstücke werden zunächst ein erstes Werkstück 1 und ein zweites Werkstück 2 so zueinander positioniert, wie diese später miteinander verbunden werden sollen. Die Ausrichtung der Werkstücke 1, 2 zueinander ist dabei abhängig davon, wie hier nicht dargestellte Bauteile innerhalb der Werkstücke 1, 2 zueinander positioniert werden sollen, um die Funktion der Bauteile sicherzustellen. So kann zum Beispiel im ersten Werkstück 1 eine Optik einer digitalen Kamera aufgenommen sein und im zweiten Werkstück 2 eine Platine mit einem optischen Bildspeichermedium. Vor dem Verbinden der Werkstücke 1, 2 sind diese so auszurichten, dass das optische Bildspeichermedium das ganze, von der Optik erfasste Bild aufnimmt. Auch sollte das von der Optik erfasste Bild möglichst mittig auf dem optischen Bildspeichermedium aufgenommen werden.

Um die Werkstücke 1, 2 zueinander ausrichten zu können, ist zwischen den Werkstücken 1, 2 ein Spalt 3 ausgebildet. Im Bereich des Spaltes 3 lassen sich die Werkstücke 1, 2 relativ zueinander bewegen. Nach dem Ausrichten der Werkstücke 1, 2 ist es möglich, dass der Spalt 3 an einer Stelle eine größere Spaltbreite d₁ aufweist als an einer anderen Stelle. Eine kleinere Spaltbreite ist hier mit d₂ gekennzeichnet. Die unterschiedlichen Spaltbreiten d₁, d₂ führen dazu, dass die Werkstücke 1, 2 schräg zueinander stehen. An der dem zweiten Werkstück 2 zugewandten Seite weist das erste Werkstück 1 eine Erweiterung 4 auf. Das zweite Werkstück 2 greift in die Erweiterung 4 des ersten Werkstückes 1 ein. Vor der Positionierung der Werkstücke 1, 2 zueinander, werden die Innenseite 5 der Erweiterung 4 und die Außenseite 6 des zweiten Werkstückes 2 in dem Bereich, in dem das zweite Werkstück 2 in die Erweiterung 4 des ersten Werkstückes 1 eingreift, mit Fixierkleber benetzt. Nach dem Ausrichten der Werkstücke 1, 2 zueinander, werden in den Bereich zwischen der Innenseite 5 der Erweiterung 4 und der Außenseite 6 des zweiten Werkstückes 2 Verbindungsteile 7 platziert. Bei der in Figur 1 dargestellten Ausführungsvariante haben die Verbindungsteile 7 einen kreisförmigen Querschnitt. Die Position der Verbindungsteile 7 wird so gewählt, dass diese die Innenseite 5 der Erweiterung 4 und die Außenseite 6 des zweiten Werkstückes 2 berühren. Aufgrund des auf die Innenseite 5 der Erweiterung 4 und die Außenseite 6 des zweiten Werkstückes 2 aufgetragenen Fixierklebers werden die Verbindungsteile 7 über eine Klebeverbindung 8 mit der Innenseite 5 der Erweiterung 4 und über eine Klebeverbindung 9 mit der Außenseite 6 des zweiten Werkstückes 2 verbunden.

Bei aufrechter Ausrichtung, d. h. bei parallel zur Erdoberfläche verlaufender Erweiterung 4, erzwingt die Erweiterung 4 durch die Erdanziehung einen direkten Kontakt der Verbindungsteile 7 mit kreisförmigem Querschnitt mit den Werkstücken 1 und 2.

Während des Ausrichtens des ersten Werkstückes 1 und des zweiten Werkstückes 2 zueinander und dem Einbringen der Verbindungsteile 7 sind das erste Werkstück 1 und das zweite Werkstück 2 jeweils in einer Haltevorrichtung aufgenommen, welche die Justierung der Werkstücke 1, 2 zueinander ermöglicht. Nach dem Aushärten des Fixierklebers werden die Werkstücke 1, 2 aus der Haltevorrichtung genommen. Durch die Verbindungsteile 7, die jeweils mit der Innenseite 5 der Erweiterung 4 und der Außenseite 6 des zweiten Werkstückes 2 verbunden sind, können sich das erste Werkstück 1 und das zweite Werkstück 2 nicht mehr relativ zueinander bewegen. Die Verbindung kann jedoch durch Aufbringen von äußeren Kräften aufgrund der nur geringen Klebefläche zwischen dem ersten Werkstück 1 beziehungsweise zweiten Werkstück 2 und dem Verbindungsteil 7 gelöst werden. Um eine stabile Verbindung des ersten Werkstückes 1 mit dem zweiten Werkstück 2 zu erhalten, ist es daher notwendig, den Bereich zwischen der Innenseite 5 der Erweiterung 4 und der Außenseite 6 des zweiten Werkstückes 2 mit einem Klebstoff 10 aufzufiillen. Es ist auch möglich, die Werkstücke 1, 2 nach dem Aushärten des Fixierklebers in der Haltevorrichtung zu belassen und den Klebstoff 10 in den Bereich zwischen der Innenseite 5 der Erweiterung 4 und der Außenseite 6 des zweiten Werkstückes 2 einzubringen, solange die Werkstücke 1, 2 in der Haltevorrichtung aufgenommen sind.

Damit beim Verkleben eines Gehäuses kein Klebstoff in das Gehäuseinnere gelangt, ist der Klebestoff 10 vorzugsweise dickflüssig. Nach dem Aushärten ist der Klebstoff vorzugsweise hartelastisch über den gesamten Temperaturbereich, dem die miteinander verklebten Werkstücke 1, 2 ausgesetzt sind. Hierdurch wird vermieden, dass aufgrund des Klebstoffes 10 Verspannungen zwischen den Werkstücken 1, 2 auftreten. Auch sollte der Klebstoff vorzugsweise langsam aushärten, damit keine Verspannungen durch den Schrumpf des Klebstoffes 10 beim Aushärten auftreten.

Durch die Verbindungsteile 7, welche zwischen dem ersten Werkstück 1 und dem zweiten Werkstück 2 aufgenommen sind, wird vermieden, dass sich die Werkstücke 1, 2 beim Aushärten des Klebstoffes 10 relativ zueinander bewegen. Durch das Auffüllen mit dem Klebstoff 10 wird eine großflächige Klebeverbindung erreicht, die eine haltbare Verbindung der Werkstücke 1, 2 gewährleistet.

Um eine große Anzahl an Werkstücken 1, 2 innerhalb einer kurzen Zeit miteinander zu verkleben, und so das Klebeverfahren großserientauglich zu machen, wird als Fixierkleber vorzugsweise ein Klebstoff verwendet, welcher schnell aushärtet. Auch ist es möglich, Klebstoffe zu verwenden, bei denen das Aushärten durch Zugabe eines Aktivators oder durch Bestrahlung mit UV- oder IR-Strahlung beschleunigt wird. Ein dünnflächiges Auftragen des Fixierklebers wird dadurch erreicht, dass der Fixierkleber vor dem Aushärten möglichst dünnflüssig ist.

Die Auswahl des Fixierklebers und des Klebstoffes 10 ist dabei in Abhängigkeit vom Material der Werkstücke 1, 2 so zu treffen, dass eine stabile Verbindung der Werkstücke 1, 2 gewährleistet wird.

Figur 2 zeigt eine erfindungsgemäße Klebeverbindung in einer zweiten Ausführungsvariante.

Bei der in Figur 2 dargestellten Ausführungsform stoßen die Werkstücke 1, 2 bündig aufeinander. Es ist keine Erweiterung 4 am ersten Werkstück 1 ausgebildet, in welche das zweite Werkstück 2 eingreift. Zur Verbindung der Werkstücke 1, 2 wird zunächst ein Fixierkleber auf den jeweils zum anderen Werkstück weisenden Stirnflächen 11 und der Außenseite 12 der Werkstücke 1, 2 im Bereich der Klebestelle aufgetragen. Anschließend werden die Werkstücke zueinander positioniert, wobei auch hier unterschiedliche Spaltbreiten d₁ und d₂ am Verbindungsspalt zwischen den Werkstücken 1, 2 auftreten können. Eine Fixierung der Werkstücke 1, 2 zueinander wird dadurch erreicht, dass im Bereich des Spaltes 3 von außen Verbindungselemente derart aufgebracht werden, dass diese das erste Werkstück 1 und das zweite Werkstück 2 berühren und so an Klebeverbindungen 13 mit dem ersten Werkstück 1 und dem zweiten Werkstück 2 verbunden werden. Nach dem Aushärten des Fixierklebers und der auf diese Weise erreichten Verbindung der Werkstücke 1 und 2 werden diese aus der Haltevorrichtung genommen, in welcher die Werkstücke zueinander positioniert wurden. Im Bereich des Klebespaltes 3 wird nun Klebstoff 10 aufgetragen, wobei der Klebstoff jeweils über den Spalt 3 die Außenseiten 12 der Werkstücke 1, 2 benetzt. Auch in der hier dargestellten Ausführungsform ist es natürlich möglich, den Klebstoff 10 zu applizieren, solange die Werkstücke 1, 2 noch in der Haltevorrichtung aufgenommen sind. Nach dem Aushärten des Klebstoffes 10 wird so eine dauerhafte Verbindung der Werkstücke 1, 2 erreicht. Durch die mit Hilfe des Fixierklebers mit den Werkstücken 1, 2 verbundenen Verbindungsteile 7 wird vermieden, dass sich die Werkstücke 1, 2 beim Aushärten des Klebstoffes 10 gegeneinander verschieben. Auch wird durch die Verbindungsteile vermieden, dass in den Werkstücken 1, 2 Verspannungen oder Verformungen auftreten.

Auch in der in Figur 2 dargestellten Ausführungsform haben die Verbindungsteile 7 einen kreisförmigen Querschnitt. Neben den hier dargestellten kreisförmigen Querschnitt können die Verbindungsteile jedoch auch jeden beliebigen anderen, dem Fachmann bekannten Querschnitt annehmen. So können die Verbindungsteile 7 zum Beispiel einen dreieckförmigen, einen quadratischen, einen rechteckigen Querschnitt, einen Querschnitt in Form eines Polygons mit beliebig vielen Ecken, einen elliptischen Querschnitt oder jeden beliebigen anderen, dem Fachmann bekannten Querschnitt aufweisen.

Im Gegensatz zu der in Figur 1 dargestellten Ausführungsform, bei der ein Kontakt der Verbindungsteile 7 mit den Werkstücken 1, 2 aufgrund der Erdanziehungskraft erzwungen wird, müssen die Verbindungsteile bei der in Figur 2 dargestellten Ausführungsform in den Spalt 3 platziert werden.

Figur 3 zeigt die erfmdungsgemäße Verbindung zweier Werkstücke mit kreisförmigem Querschnitt.

Bei der in Figur 3 dargestellten Ausführungsform weist das erste Werkstück 1 im Bereich der Klebestelle einen größeren Durchmesser auf als das zweite Werkstück 2. Hierdurch bildet sich zwischen den Werkstücken 1, 2 ein Spalt 15 aus. Die Fixierung der Werkstücke 1, 2 miteinander erfolgt über kugelförmige Verbindungsteile 14, die im Spalt 15 platziert werden. Vorteil von kugelförmigen Verbindungselementen 14 ist es, dass sich damit Werkstücke 1, 2 mit jedem beliebigen Querschnitt fixieren lassen, da kugelförmige Verbindungsteile 14 nur jeweils mit einem Punkt oder einem Kreissegment mit dem Werkstück 1, 2 verbunden sind.

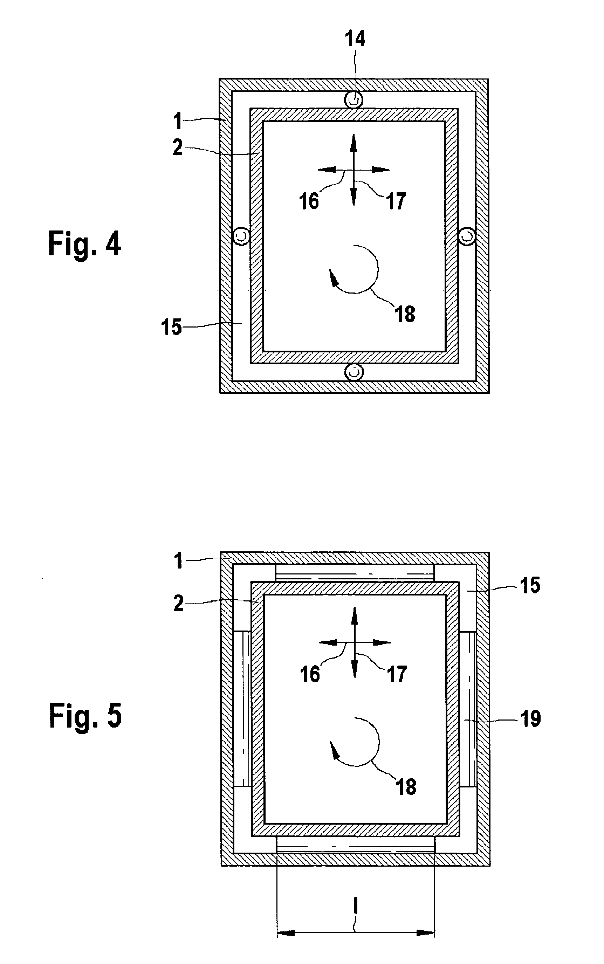

Figur 4 zeigt eine erfindungsgemäße Klebeverbindung für Bauteile mit rechteckförmigem Querschnitt und kugelförmigen Verbindungsteilen.

Auch bei dem in Figur 4 dargestellten Werkstücken 1, 2 mit rechteckförmigem Querschnitt ist der Umfang des ersten Werkstückes 1 größer als der Umfang des zweiten Werkstückes 2, so dass das zweite Werkstück 2 in das erste Werkstück 1 eingreift. Zum Positionieren der Werkstücke 1, 2 wird das erste Werkstück 1 vorzugsweise fest eingespannt und das zweite Werkstück 2 in einer Halterung aufgenommen, mit welcher sich das zweite Werkstück 2 gegenüber dem ersten Werkstück 1 bewegen lässt. Um eine optimale Position des zweiten Werkstückes 2 zum ersten Werkstück 1 zu finden, ist es notwendig, dass sich das zweite Werkstück 2 relativ zum ersten Werkstück 1 nach links und rechts - dargestellt mit Bezugszeichen 16 - nach vorne und hinten (dargestellt mit Bezugszeichen 17) - und nach oben und unten bewegen lässt. Weiterhin sollte vorgesehen sein, dass sich das zweite Werkstück 2 relativ zum ersten Werkstück 1 um eine vertikale Achse drehen lässt - dargestellt durch den mit Bezugszeichen 18 bezeichneten Pfeil - und um die beiden horizontalen Achsen drehen lässt, wobei die vertikale sowie die beiden horizontalen Achsen jeweils einen Winkel von 90° zueinander einschließen. Um eine feste Verbindung des ersten Werkstückes 1 mit dem zweiten Werkstück 2 zu erzielen, bevor der Klebstoff 10 in den Klebespalt 15 eingebracht wird, ist bei Werkstücken 1, 2 mit rechteckförmigem Querschnitt vorzugsweise mindestens ein kugelförmiges Verbindungsteil 14 an jeder Seite des Rechteckes angeordnet. Die kugelförmigen Verbindungsteile 14 können auch in den Ecken angeordnet sein. Weiterhin ist es möglich, mehr als ein kugelförmiges Verbindungsteil 14 pro Seite im Klebespalt 15 aufzunehmen.

Die in Figur 5 dargestellte Ausführungsform unterscheidet sich von der Ausführungsform gemäß Figur 4 dadurch, dass an Stelle der kugelförmigen Verbindungsteile 14 zylinderförmige Verbindungsteile 19 verwendet werden, um das erste Werkstück 1 mit dem zweiten Werkstück 2 zu verbinden. Die Länge 1 der zylinderförmigen Verbindungsteile 19 kann dabei so gewählt sein, dass diese der Länge einer Seite des zweiten, innen liegenden Werkstückes 2 entspricht.

Neben der Ausführungsform, bei der die Länge 1 der zylinderförmigen Verbindungsteile 19 der Länge der Seiten des zweiten Werkstückes 2 entspricht, können auch zylinderförmige Verbindungsteile 19 eingesetzt werden, die sehr viel kürzer sind als die Länge der Seiten des zweiten Werkstückes 2. In diesem Fall wird an jeder Seite mindestens ein zylinderförmiges Verbindungsteil 19 im Klebespalt 15 angesetzt, es können aber auch mehrere zylinderförmige Verbindungsteile 19 eingesetzt werden.

Zur Endverklebung der Werkstücke 1, 2 mit dem Klebstoff 10 wird in allen in den Figuren 1 bis 5 dargestellten Ausführungsformen vorzugsweise ein dickflüssiger Klebstoff verwendet, der nach dem Aushärten hartelastisch ist. Solche dickflüssigen Klebstoffe sind vorzugsweise Zweikomponentenklebstoffe.

Neben den in Figuren 3 bis 5 dargestellten Werkstücken 1, 2 mit kreisförmigem oder rechteckförmigem Querschnitt lässt sich das Verfahren zum Verkleben von Werkstücken auch für Werkstücke mit jedem beliebigen anderem Querschnitt anwenden.

Anstelle der in den Figuren 1 bis 5 dargestellten kugel- beziehungsweise zylinderförmigen Verbindungsteile 7, 14, 19 können auch kegelförmige, quaderförmige oder würfelförmige Verbindungsteile oder Verbindungsteile in Form eines Prismas mit beliebigem Querschnitt oder eines Polyeders mit einer beliebigen Anzahl an Flächen oder unregelmäßig geformte Verbindungsstücke verwendet werden.

## Patentansprüche

1. Verfahren zum Verkleben von zwei Werkstücken (1, 2), folgende Schritte umfassend:
a) Auftragen von Fixierkleber auf die zwei zu verbindenden Werkstücke (1, 2),
b) Justieren der zu verbindenden Werkstücke (1, 2) zueinander,
c) Platzieren von Verbindungsteilen (7, 14, 19) an den mit Fixierkleber benetzten Flächen (5, 6,11, 12), so dass die Verbindungsteile (7, 14, 19) mit den zwei zu verbindenden Werkstücken (1,2) in Kontakt stehen,
d) Nach dem Aushärten des Fixierklebers Verkleben der Werkstücke (1, 2) mit einem Klebstoff (10).

2. Verfahren nach Anspruch 1, **dadurch gekennzeichnet, dass** die Werkstücke (1, 2) zum Justieren in einer Justiervorrichtung gehalten werden.

3. Verfahren nach Anspruch 2, **dadurch gekennzeichnet, dass** die Platzierung der Verbindungsteile (7, 14, 19) in der Justiervorrichtung erfolgt.

4. Verfahren nach Anspruch 3, **dadurch gekennzeichnet, dass** der Fixierkleber aushärtet, solange sich die Werkstücke (1, 2) in der Justiervorrichtung befinden.

5. Verfahren nach einem der Ansprüche 1 bis 4, **dadurch gekennzeichnet, dass** die Verbindungsteile (7, 14, 19) Kugeln, Kegel, Prismen mit beliebigem Querschnitt, vorzugsweise Quader oder Würfel, Polyeder mit einer beliebigen Anzahl von Flächen sind, oder unregelmäßig geformt sind.

6. Verfahren nach einem der Ansprüche 1 bis 5, **dadurch gekennzeichnet, dass** die Umgebungsbedingungen zum Aushärten des Klebstoffes (10) so gewählt werden, dass der Klebstoff (10) langsam aushärtet.

7. Verfahren nach einem der Ansprüche 1 bis 6, **dadurch gekennzeichnet, dass** der Klebstoff (10) nach dem Aushärten in einem Temperaturbereich von -40°C bis +85°C hart-elastisch ist.

8. Verfahren nach einem der Ansprüche 1 bis 7, **dadurch gekennzeichnet, dass** der Fixierkleber vor dem Aushärten dünnflüssig und nach dem Aushärten hart-spröde ist.

9. Verfahren nach einem der Ansprüche 1 bis 8, **dadurch gekennzeichnet, dass** der Klebstoff (10) ein Zweikomponentenklebstoff oder ein durch Lösemittelverdampfung aushärtender Klebstoff ist.

10. Verfahren nach einem der Ansprüche 2 bis 9, **dadurch gekennzeichnet, dass** die Werkstücke (1, 2) nach dem Aushärten des Fixierklebers aus der Justiervorrichtung entnommen werden.

11. Vorrichtung umfassend zwei Werkstücke (1, 2), die so zueinander positioniert sind, dass sie mit einem Klebstoff (10) miteinander verklebt sind, wobei zwischen den Werkstücken (1, 2) ein mit Fixierkleber benetzter Spalt (3) ausgebildet ist, über welchen diese zueinander ausgerichtet sind, **dadurch gekennzeichnet, dass** im Bereich des Spaltes (3) Verbindungsteile (7,14, 19) aufgenommen sind, durch die die Position der Werkstücke (1, 2) durch den Fixierkleber zueinander dadurch fixiert ist, indem die Verbindungsteile (7, 14, 19) mit den zwei Werkstücken (1, 2) in Kontakt stehen.

12. Vorrichtung nach Anspruch 11, **dadurch gekennzeichnet, dass** die Verbindungsteile (7, 14, 19) kugelförmig oder zylinderförmig sind.

13. Vorrichtung nach Anspruch 11 oder 12, **dadurch gekennzeichnet, dass** durch das Verkleben der Werkstücke (1, 2) und der Verbindungsteile (7, 14, 19) mit Klebstoff (10) der Spalt (3) zwischen den Werkstücken (1, 2) gegen die Umgebung abgedichtet ist.

14. Vorrichtung nach Anspruch 11 oder 12, **dadurch gekennzeichnet, dass** die Werkstücke (1, 2) ein Objektivgehäuse und ein Imagergehäuse einer Kamera sind.

15. Verwendung der Vorrichtung nach Anspruch 14, **dadurch gekennzeichnet, dass** die Kamera in einem optischen Fahrassistenz-System in einem Kraftfahrzeug eingesetzt wird.

## Claims

1. Method for glueing two workpieces (1, 2) together, comprising the following steps:
a) applying fixing glue to the two workpieces (1, 2) to be connected,
b) adjusting the workpieces (1, 2) to be connected in relation to each other,
c) placing connecting parts (7, 14, 19) against the surfaces (5, 6, 11, 12) wetted with fixing glue, so that the connecting parts (7, 14, 19) are in contact with the two workpieces (1, 2) to be connected,
d) after the fixing glue has cured, glueing the workpieces (1, 2) together with an adhesive (10).

2. Method according to Claim 1, **characterized in that**, for the adjusting, the workpieces (1, 2) are held in an adjusting device.

3. Method according to Claim 2, **characterized in that** the placing of the connecting parts (7, 14, 19) takes place in the adjusting device.

4. Method according to Claim 3, **characterized in that** the fixing glue cures while the workpieces (1, 2) are in the adjusting device.

5. Method according to one of Claims 1 to 4, **characterized in that** the connecting parts (7, 14, 19) are spheres, cones, prisms of any desired cross section, preferably right-parallelepipeds or cubes, or polyhedrons with any number of faces, or are irregularly formed.

6. Method according to one of Claims 1 to 5, **characterized in that** the ambient conditions for the curing of the adhesive (10) are chosen such that the adhesive (10) cures slowly.

7. Method according to one of Claims 1 to 6, **characterized in that**, once it has cured, the adhesive (10) is hard-elastic in a temperature range from -40°C to +85°C.

8. Method according to one of Claims 1 to 7, **characterized in that** the fixing glue is runny before it has cured and hard-brittle after it has cured.

9. Method according to one of Claims 1 to 8, **characterized in that** the adhesive (10) is a two-component adhesive or an adhesive that cures by solvent evaporation.

10. Method according to one of Claims 2 to 9, **characterized in that**, once the fixing glue has cured, the workpieces (1, 2) are removed from the adjusting device.

11. Device comprising two workpieces (1, 2), which are positioned in relation to each other in such a way that they are glued together with an adhesive (10), a gap (3) which is wetted with fixing glue and by means of which the workpieces (1, 2) are aligned in relation to each other being formed between said workpieces, **characterized in that** the region of the gap (3) accommodates connecting parts (7, 14, 19), by which the position of the workpieces (1, 2) is fixed in relation to each other by the fixing glue in that the connecting parts (7, 14, 19) are in contact with the two workpieces (1, 2).

12. Device according to Claim 11, **characterized in that** the connecting parts (7, 14, 19) are spherical or cylindrical.

13. Device according to Claim 11 or 12, **characterized in that** the gap (3) between the workpieces (1, 2) is sealed with respect to the surroundings by the glueing together of the workpieces (1, 2) and the connecting parts (7, 14, 19) with adhesive (10).

14. Device according to Claim 11 or 12, **characterized in that** the workpieces (1, 2) are a lens housing and an imager housing of a camera.

15. Use of the device according to Claim 14, **characterized in that** the camera is used in an optical driver assistance system in a motor vehicle.

## Revendications

1. Procédé pour coller deux pièces (1, 2) comprenant les étapes suivantes :
a) application de colle de fixation sur les deux pièces à assembler (1, 2),
b) ajuster l'une à l'autre les pièces à assembler (1, 2),
c) mise en place de pièces d'assemblage (7, 14, 19) sur les surfaces (5, 6, 11, 12) mouillées de colle de fixation, de sorte que les pièces d'assemblage (7, 14, 19) soient en contact avec les deux pièces à assembler (1, 2),
d) après le durcissement de la colle de fixation, collage des pièces (1, 2) avec un adhésif (10).

2. Procédé selon la revendication 1, **caractérisé en ce que** les pièces (1, 2) sont maintenues dans un dispositif d'ajustement en vue de leur ajustement.

3. Procédé selon la revendication 2, **caractérisé en ce que** la mise en place des pièces d'assemblage (7, 14, 19) s'effectue dans le dispositif d'ajustement.

4. Procédé selon la revendication 3, **caractérisé en ce que** la colle de fixation durcit tant que les pièces (1, 2) se trouvent dans le dispositif d'ajustement.

5. Procédé selon l'une quelconque des revendications 1 à 4, **caractérisé en ce que** les pièces d'assemblage (7, 14, 19) sont des billes, des cônes, des prismes de section transversale quelconque, de préférence des quadrilatères ou des cubes, des polyèdres ayant un nombre quelconque de surfaces, ou sont formées de manière irrégulière.

6. Procédé selon l'une quelconque des revendications 1 à 5, **caractérisé en ce que** les conditions environnantes pour le durcissement de l'adhésif (10) sont choisies de telle sorte que l'adhésif (10) durcisse lentement.

7. Procédé selon l'une quelconque des revendications 1 à 6, **caractérisé en ce que** l'adhésif (10) est dur-élastique après son durcissement dans une plage de températures de -40°C à +85°C.

8. Procédé selon l'une quelconque des revendications 1 à 7, **caractérisé en ce que** la colle de fixation avant le durcissement a une faible viscosité et après le durcissement est dure-cassante.

9. Procédé selon l'une quelconque des revendications 1 à 8, **caractérisé en ce que** l'adhésif (10) est un adhésif à deux composants ou un adhésif durcissant par évaporation d'un solvant.

10. Procédé selon l'une quelconque des revendications 2 à 9, **caractérisé en ce que** les pièces (1, 2) sont enlevées du dispositif d'ajustement après le durcissement de la colle de fixation.

11. Dispositif comprenant deux pièces (1, 2) qui sont positionnées l'une par rapport à l'autre de telle sorte qu'elles soient collées l'une à l'autre avec un adhésif (10), une fente (3) mouillée avec de la colle de fixation étant réalisée entre les pièces (1, 2), et permettant d'ajuster ces pièces l'une à l'autre, **caractérisé en ce que** dans la région de la fente (3), des pièces d'assemblage (7, 14, 19) sont reçues, lesquelles permettent de fixer la position l'une par rapport à l'autre des pièces (1, 2) par la colle de fixation, **en ce que** les pièces d'assemblage (7, 14, 19) sont en contact avec les deux pièces (1, 2).

12. Dispositif selon la revendication 11, **caractérisé en ce que** les pièces d'assemblage (7, 14, 19) sont sphériques ou cylindriques.

13. Dispositif selon la revendication 11 ou 12, **caractérisé en ce que** le collage des pièces (1, 2) et des pièces d'assemblage (7, 14, 19) avec de l'adhésif (10) étanchéifie la fente (3) entre les pièces (1, 2) vis-à-vis de l'environnement.

14. Dispositif selon la revendication 11 ou 12, **caractérisé en ce que** les pièces (1, 2) sont un boîtier d'objectif ou un boîtier d'image d'un appareil photo.

15. Utilisation du dispositif selon la revendication 14, **caractérisée en ce que** l'appareil photo est inséré dans un système d'aide à la conduite optique dans un véhicule automobile.
